Europäisches Patentamt

European Patent Office

Office européen des brevets

(11) Veröffentlichungsnummer: **0 308 684**
**A1**

## (12) EUROPÄISCHE PATENTANMELDUNG

(21) Anmeldenummer: 88113956.2

(22) Anmeldetag: 26.08.88

(51) Int. Cl.4: **B60P 1/26**

(30) Priorität: 25.09.87 CS 6899/87

(43) Veröffentlichungstag der Anmeldung:
**29.03.89 Patentblatt 89/13**

(84) Benannte Vertragsstaaten:
**DE FR GB IT NL SE**

(71) Anmelder: **KOVOSROT PRAHA, KONCERNOVY PODNIK**
**Ke Kablu 289**
**Praha 10(CS)**

(72) Erfinder: **Svoboda, Rostislav**
**Vozniakova 1249**
**Praha 5(CS)**
Erfinder: **Sykora, Ondrej**
**Belinskeho 963/5**
**Praha 10(CS)**
Erfinder: **Hudecek, Jiri**
**Rezlerova 285**
**Praha 10(CS)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) Vorrichtung zum Öffnen und Schliessen einer Wand des Ladegutkastens eines Fahrzeugs.

(57) Gegenstand der Erfindung ist eine Vorrichtung zur selbsttätigen Betätigung der Rückwand (3) oder der Seitenwände eines kippbaren Ladegutkastens eines Fahrzeugs. Die in Lagern (8) am Ladegutkasten (2) angelenkte Wand (3) ist über ein Führungssegment (8) und ein Kraftübertragungsorgan (7) mit dem Rahmen (1) des Fahrzeugs verbunden und wird bei einer Kippbewegung selbsttätig geöffnet bzw. geschlossen.

## Vorrichtung zum Öffnen und Schließen einer Wand des Ladegutkastens eines Fahrzeugs

Die Erfindung betrifft eine Vorrichtung zum selbsttätigen Öffnen und Schließen den durch einen hydraulischen Kippzylinder verschwenkbaren Ladengutkastens eines Kraftfahrzeugs.

Bei Transportfahrzeugen für insbesondere Schüttgüter mit hydraulisch kippbarem Ladegutkasten ist die beim Entladen öffnende Kastenwand meist in oberen Drehlagern an den angrenzenden Wänden schwenkbar aufgehängt und kann über manuell oder motorisch betätigbare Verriegelungen in ihrer Schließstellung arretiert werden.

In gekippter Entladestellung des Ladegutkastens hängt diese Wand nach Lösen der Verriegelung freischwenkbar nach unten, wobei das Ladegut durch den zwischen der Ladefläche und der unteren Wandkante durchrutschen kann. Beim Entladen von sperrigen Gütern treten Probleme auf, da sich diese zwischen der schräg gestellten Ladefläche und der vertikal hängenden Wand festklemmen können.

Ferner sind spezielle Vorrichtungen zum zwangsweisen Öffnen und Schließen des ladegutkastens bekannt, bei denen eine in Gelenken aufgehängte Seiten- oder Rückwand über gesonderte Antriebe, z.B. Stellzylinder und Übersetzungsmechanismen, wie Zugorgane oder Hebelgestänge, verschwenkt werden. .

Diese Vorrichtungen sind technisch aufwendig, teuer und verschließanfällig.

Bei allen Transportfahrzeugen mit am oberen Rand aufgehängten Rück- oder Seitenwänden behindert der obere beim Aufschwenken in seiner Lage verbleibende Rand der Stirn- oder Seitenwand den Entladevorgang, insbesondere beim Ausschütten von Stückmaterial.

Aufgabe der Erfindung ist es, eine Vorrichtung zum selbsttätigen Öffnen und Schließen eines Ladegutkastens zu schaffen, die bei einfachem und kostengünstigem Aufbau ein weites Öffnen der jeweiligen Kastenwand ermöglicht und ein ungehindertes Abrutschen auch sperriger Ladegüter von der Ladefläche gewährleistet.

Diese Aufgabe wird erfindungsgemäß dadurch gelöst, daß sie aus einem Kraftsegment und einer festen Halterung an der Stirnwand oder den Seitenwänden gebildet ist, an der mindestens ein Kraftübertragungsorgan (Seil bzw. Kette) festgelegt ist, das gespannt in ein festes Gegenlager am Fahrzeugrahmen geführt wird.

Die zuverlässige Wirkung der Vorrichtung beruht in der einfachen Konstruktion und der selbsttätigen Betätigung der hinteren Stirnwand oder der Seitenwände, wobei deren obere Kante kein Hindernis für das ladegut darstellt, da die gesamte Wand beim Kippen des Ladegutkastens angehoben wird. Beim Kippen werden die Rückwand bzw. eine Seitenwand selbsttätig fließend gehoben und beim Aufsetzen des Ladegutkastens fließend geschlossen. Die Anschaffungskosten der Vorrichtung und die Instandhaltung sind gering und ihre Lebensdauer ist lang. Ein weiterer Vorteil liegt darin, daß durch Öffnen der Rückwand oder einer Seitenwand sämtliche Materialsorten entladen werden können, ohne daß ein manueller Eingriff nötig ist. Die Stirnwand bzw. die Seitenwand ist in der gehobenen Lage frei, so daß sie vom abrutschenden Material nicht beschädigt werden können.

Die erfindungsgemäße Vorrichtung kann in bestehenden Fahrzeugen nachträglich eingebaut oder beim Fahrzeughersteller montiert werden. Die Vorrichtung kann für ein-und zweiseitige Kipper angewendet werden.

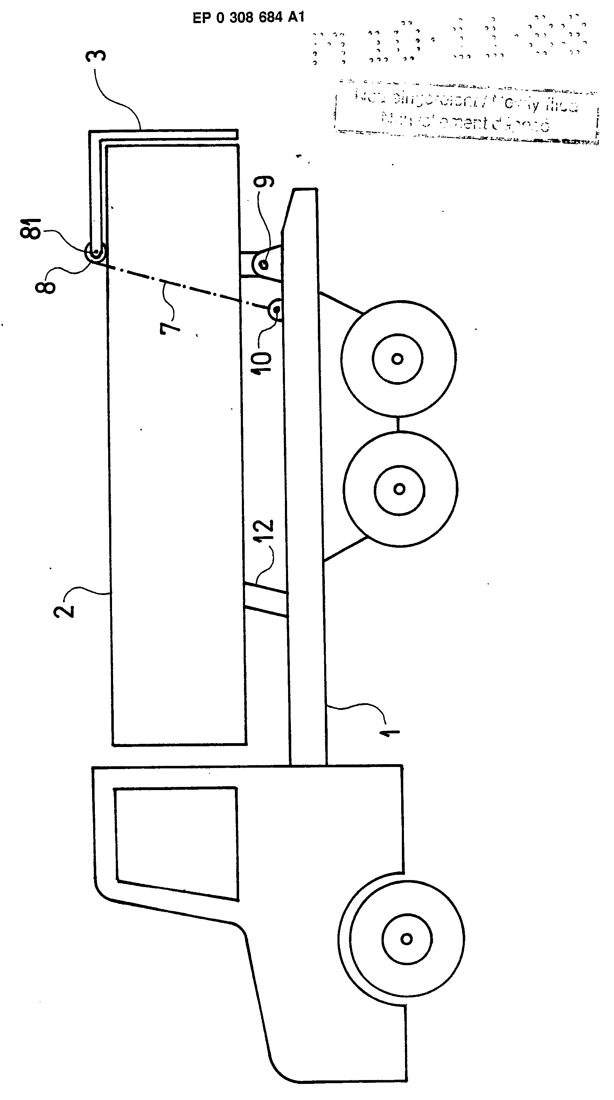

Weitere Merkmale und Vorteile der Erfindung ergeben sich aus der folgenden Beschreibung eines Ausführungsbeispeils anhand der Zeichnung, in der ein LKW mit kippbarem Ladekasten in schematischer Seitenansicht dargestellt ist.

Der LKW enthält einen formsteifen Rahmenträger 1 und einen darauf abgestützten Ladegutkasten 2, der zum Entladen mittels eines Hydraulikzylinders 12 nach rückwärts aufwärts gekippt werden kann.

An der Rückwand 3 des Ladekastens 2 sind Holme 31 starr befestigt, die in der dargestellten Position sich parallel oberhalb der Seitenwände erstrecken. Diese Holme 31 sind mit ihren vorderen Enden in mindestens einem Lagerbock 8 bzw. Führungselement 8 schwenkbar gehalten, das etwa senkrecht oberhalb des Kipplagers 9 am Ladegutkasten 2 montiert ist. Ferner ist an den Vorderenden der Holme 31 ein Zugelement (Seil oder Kette) 7 angeschlagen, dessen unteres Ende an einem Bock 10 am Rahmen 1 befestigt ist. Dieser Bock 10 ist mit einem vorbestimmten Abstand vor dem Kipplager 9 angeordnet.

Zum Entladen von z.B. Schüttgut wird der Ladegutkasten 2 durch Ausfahren des Hydraulikzylinders 12 um das Kipplager 9 geschwenkt. Dabei ergibt sich eine Relativbewegung der Rückwand 3 gegenüber dem Ladegutkasten 2 um den Drehpunkt 81 des Lagerbocks 8 und eine fließende Hebebewegung der Rückwand 3 bis zum Totpunkt durch das gespannte Seil 7. Beim Einfahren des hydraulischen Kippzylinders 12 führt das Gewicht der Rückwand 3 zum Schließen der Rückwand 3.

Die Erfindung ist nicht auf die dargestellte Ausführung beschränkt, sondern kann in verschiedener Weise abgewandelt werden, solange das Funktionsprinzip, nämlich die Ableitung der Öffnungs- und Schließbewegung mindestens einer Begrenzungswand des Ladegutkastens von der Kippbewegung mittels einfacher Übertragungsorgane erhalten bleibt. Beispielsweise können statt der Seile bzw. Ketten 7 auch Stangen verwendet werden, die ein zwangsweises Schließen der jeweiligen Kastenwand bewirken.

Bezugszeichen

1 Fahrzeugrahmen
2 Ladegutkasten
3 Rückwand
31 Holme
81 Drehpunkt
8 Führungskraftsegment bzw. Drehlager
10 Bock
7 Zugorgan
12 hydraulischer Kippzylinder
9 Kipplager

## Ansprüche

1. Vorrichtung zum selbsttätigen Öffnen und Schließen eines kippbaren Ladegutkastens (2) eines Fahrzeugs, dessen mindestens eine Wand 3 in einem oberen Drehlager (8) am Ladegutkasten 2 schwenkbar gelagert ist,
**dadurch gekennzeichnet,**
daß das als Führungskraftsegment ausgebildete obere Drehlager (8) eine feste Halterung für ein Kraftübertragungsorgan (7) aufweist, das mit seinem anderen Ende an einem Bock (10) am Fahrzeugrahmen (1) angebracht ist.

2. Vorrichtung nach Anspruch 1, dadurch gekennzeichnet, daß am oberen Rand der Wand (3) Querholme (31) befestigt sind, deren vordere Enden im Drehlager (8) gehalten sind.

3. Vorrichtung nach Anspruch 1 oder 2, dadurch gekennzeichnet, daß das Drehlager (8) etwa senkrecht über dem Kipplager (10) des Ladegutkastens (2) positioniert ist.

EP 0 308 684 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | DE-A-3 410 144 (ANSORGE) <br> * Ansprüche 1,2; Figuren 1,2 * <br> --- | 1 | B 60 P 1/26 |
| X | CH-A- 547 185 (LANZ & MARTI) <br> * Figur * <br> --- | 2,3 | |
| A | CH-A- 257 607 (JENNY) <br> --- | | |
| A | DE-U-8 005 746 (LANG-FAHRZEUGBAU) <br> ----- | | |

**RECHERCHIERTE SACHGEBIETE (Int. Cl.3)**

B 60 P 1/00

Der vorliegende Recherchenbericht wurde für alle Patentansprüche erstellt

| Recherchenort | Abschlußdatum der Recherche | Prüfer |
|---|---|---|
| BERLIN | 17-11-1988 | LUDWIG H J |